# EUROPEAN PATENT APPLICATION

(11) **EP 4 183 248 A1**
(43) Date of publication of application: **24.05.2023**
(21) Application number: 21020586.0
(22) Date of filing: 22.11.2021
(51) Int. Cl.: A01K 1/015, B29B 9/08, B29B 9/14

(54) **METHOD FOR PREPARING GRANULES FROM WASTE OF HYDROPHILIC FIBROUS MATERIAL**

(71) Applicant: JK Gitis OÜ, 80014 Pärnu, Pärnu maakond (EE)
(72) Inventor: Gitis, Yulia, 2167 Marupe (LV); Kirillov, Kirill, 2167 Marupe (LV)
(74) Representative: Koitel, Raivo

(57) **Abstract**

A method for the production a composition of granules from the waste of hydrophilic fibrous materials comprises: shredding hydrophilic fibrous material and converting it to obtain dry loose fibre, intensive mixing with water, pelletizing the agglomerates and drying the granules.

The hydrophilic fibrous material can be paper fibres or blended fibres from paper and textile fibres.

Depending on the purpose of the resulting granules and on endowing them with the necessary properties, the technology allows the introduction of additives - sorbents for the absorption of liquids and gases, as well as the application of coating substances to granules.

## Description

### Technical field

The invention relates to a technology for the granulation of hydrophilic fibrous materials, more specifically to a method for the production of granules from waste paper and blended (paper and fabric) materials with additive materials.

### Prior art

There is known the patent "Pet litter for pets and a method for the preparation of pet litter" (CN103141396, Zhu Qun, published 12 June 2013), which uses the following ingredients, in parts by weight: from 50 to 100 parts of sludge from paper production, from 0 to 50 parts of pulp, 3 to 10 parts of binder, 3 to 5 parts of paper dust, and 0 to 5 parts of excipients. The binder may be starch; the auxiliary agent may be preservatives. The method for the preparation of the filler includes: mixing sludge and cellulose in a mixer and stirring them uniformly; adding a part of the binder and additive of the remaining binder is mixed with the auxiliary agent and paper powder and is stirred until a mixture for coating is obtained; drying the mixed base material at 100 to 150 °C to a moisture content of 4 to 8%; for granulation, the dried mixed base material is put into a granulator for the application of a coating: substrate for litter is placed in a high-speed rotary vibrating machine, a mixture is then added for coating the surface of granules. The shortcomings of this solution are: this method does not involve the production of granules from pure fibre. For the preparation of the base, there are used binders that render granules dense; drying the mixture requires more energy because binders transfer external moisture, including into colloidal moisture. It is more difficult to evaporate colloidal moisture from a mixture than external moisture from paper fibres/granules. Production of the product requires higher production costs.

Also known is "The method for granulating paper waste" (JPH02160088, Miike Tekkosho KK, published 20 June 1990), in which previously shredded waste paper is loaded into a screw device. Waste is broken up and shredded by the action of the blades of the screw and is loaded; at the same time, waste is stirred. The material being processed, in a mixed state, enters a rotating compression body, where the material is further shredded finely. Hot water generated by the release of heat evaporates when pressure drops rapidly. The material, which has a low moisture content, bursts upon the rapid evaporation of vapour and forms porous grains. A shortcoming of this solution is that the proposed method involves the processing of paper waste along with plastic waste. The resulting granules have low bulk weight, yet, due to the presence of plastic waste in the granules, have low capacity to absorb water (plastic endows the granules with hydrophobic properties), are not biodegradable, and, due to the coating properties of plastic, cannot be modified with natural additives. The method does not involve the use of textile fibres.

Also known is a method (JPH0731314, Daiki KK, published 03 February 1995) in which waste paper is dry-shredded to obtain a powder-like material, the powder material is mixed with a mixing agent and granulated to obtain granules with a diameter of ≥1 mm. A shortcoming of this solution is that the method involves the processing of paper waste, shredded to a powder state, which requires a lot of energy. The main granulation method is extrusion, which makes granules dense, with high bulk density. This method does not involve the use of textile fibres.

There is known a method for the production of litter for animals (DE69930958, Nestec Ltd, published 21 December 2006) which consists of paper, sawdust and zeolite molecular sieves. The composition is formed into granules considered attractive to dogs. In addition, the litter has a high degree of absorption and odour control. The litter composition may further include sphagnum moss to provide additional absorptive capacity. A shortcoming of this solution is that the method involves the use of impure paper waste, but in combination with moss as a water-retaining agent, and sawdust. This requires the additional consumption of natural resources. The main granulation method is extrusion, which makes granules dense. The method does not involve the use of textile fibres.

There is known a solution (US 2004079293, Rasner Kobi; Eitan Nimrod; Gilo Ziv, Cycle Group Limited, Delaware, published 29 April 2004) in which litter for animals consists of a multitude of discrete particles that are two-component granules. Each of the absorbent granules is composed of an inner core and an outer coating composition. The inner kernel of the granule consists of natural or artificial fibres, mineral filler and binder. The coating of the granules is done with an agglomerating agent and natural or artificial materials that decrease odours and/or prevent the formation of unpleasant odours. The outer coating layer consists mainly of bentonite, zeolite and/or boric acid and, optionally, fine cellulose fibres. The granules of the present invention are capable of agglomerating into lumps when wet. The method for the production of granules includes the following steps: a) preparing a homogeneous mixture for the inner core, 6) wetting and agglomerating the mixture prepared in step a) to obtain wet agglomerated core particles; B) preparing a homogeneous mixture for coating, d) applying the coating mixture prepared in step c) to the wet agglomerated core particles obtained in step b) to obtain wet agglomerated core particles with a coating, and e) drying the coated particles obtained in step d) to prepare the desired litter granules for animals. A shortcoming of this solution is that this method involves the production of granules not from pure fibre, but from a mixture of fibres with a filler and a binder, which makes the granules dense. The technology of this solution involves only two-layer granules, which makes the production process more costly.

### Summary of the invention

The object of the invention is the production from waste hydrophilic fibrous materials of granules resistant to destruction in an aquatic environment, with high absorptive capacity and high thermal insulation properties.

The proposed method for the production of granules from waste hydrophilic fibrous materials comprises the following steps:
- shredding of hydrophilic fibrous material and converting the shredded material into dry loose fibre;
- intensive mixing of the resulting dry loose fibre with water to obtain agglomerates in a blender for 10 to 60 seconds;
- pelletizing of agglomerates to give granules a spherical shape for 30 to 70 seconds in a pelletizing disk;
- drying of the resulting spherical granules at 100 to 240 °C.

The hydrophilic fibrous material is paper fibres and blended fibres from paper and textile fibres. To obtain granules, the following ratio of starting materials as a percentage of the total volume is used: hydrophilic fibrous material - 20 to 30%, water - 70 to 80%.

The method for the production of granules from waste hydrophilic fibrous materials with added powder material comprises the following steps:
- shredding of hydrophilic fibrous material and converting the shredded material into dry loose fibre;
- dry mixing of fibrous material with powder material, where the powder material is zeolite or activated carbon;
- intensive mixing of the resulting mixture of fibre and powder material with water for 10 to 60 seconds;
- pelletizing of agglomerates in a pelletizing disk to obtain granules with a spherical shape;
- drying of the resulting spherical granules.

To obtain granules by this method, the following ratio of starting materials as a percentage of the total volume is used: hydrophilic fibrous material: hydrophilic fibrous material - 17 to 21%, powder material - 1 to 36%, water - 45 to 80%.

The method for the production of granules from waste hydrophilic fibrous materials with added powder material and coating material comprises the following steps:
- shredding of hydrophilic fibrous material and converting the shredded material into dry loose fibre;
- dry mixing of fibrous material with powder material, where the powder material is zeolite or activated carbon;
- intensive mixing of the resulting mixture of fibre and powder material with water in a blender for 10 to 60 seconds;
- pelletizing of agglomerates in the pelletizing disk to obtain granules with a spherical shape;
- application of a coating material and supply of water on the surface of the granules where the coating material is bentonite;
- drying of the resulting spherical granules.

To obtain granules by this method, the following ratio of starting materials as a percentage of the total volume is used: hydrophilic fibrous material: hydrophilic fibrous material - 15 to 20%, powder material - 1 to 30%, water - 38 to 75%, coating material - 4 to 20%.

### List of figures

Figure 1 depicts dried agglomerates;
figure 2 depicts granules after the pelletizing of agglomerates;
figure 3 depicts paper-textile granules;
figure 4 depicts granules coated with bentonite;
figure 5 depicts clumping paper filler for cat litter.

### Implementation of the invention

The proposed method for the production of granules from waste hydrophilic fibrous materials comprises the following steps:
- shredding of hydrophilic fibrous material and converting the shredded material into dry loose fibre;
- intensive mixing of dry loose fibre with water to obtain agglomerates;
- pelletizing of agglomerates in the pelletizing disk to obtain granules with a spherical shape;
- drying of the resulting spherical granules.

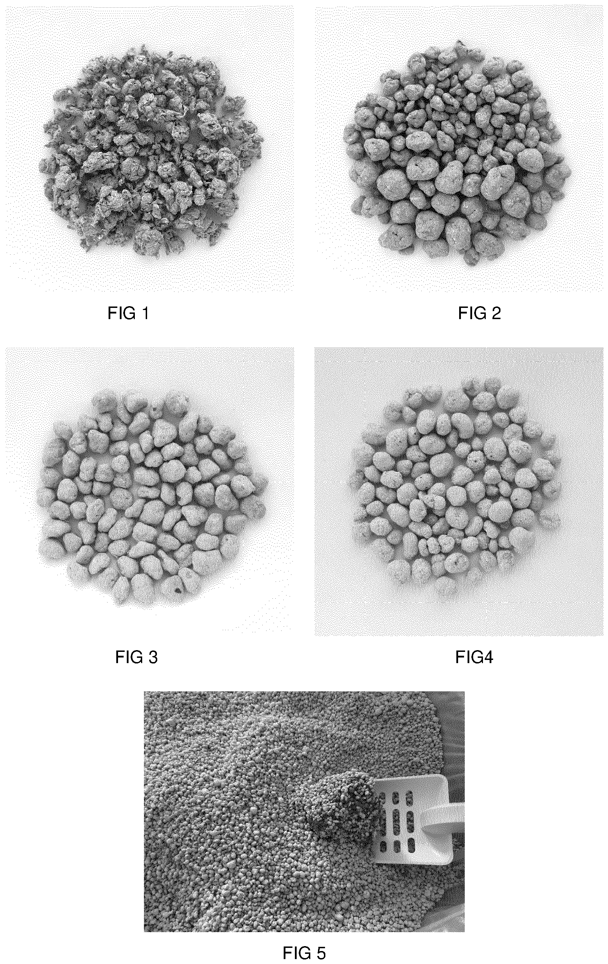

The hydrophilic fibrous material can be paper fibres (see figure 2) and blended fibres from paper and textile fibres (see figure 3).

Shredding of waste to obtain dry loose fibre is carried out by means of a shredder, hammer crusher, disintegrator, etc.

Intensive mixing of the fibre with water is carried out using a blender for 10 to 60 seconds, and by intensive mixing is meant mixing in a blender with a high rotational speed of the actuator from 200 rpm or higher.

The pelletizing of agglomerates is carried out in a disc- or drum-type pelletizer for 30 to 70 seconds.

Drying of granules is carried out in a fluidized bed, in a drying drum, a microwave dryer, etc. at 100 to 240 °C.

The composition of the resulting granules is indicated as a percentage of the total initial (before the drying step) composition of the granules, calculated based on the weight of each ingredient.

Production of granules may be carried out using a method with no pelletizing step. In this case, the agglomerates formed in the step of the intensive mixing of fibres and water will not have a spherical shape, which will pose difficulties in terms of the convenience of their subsequent use, due to the extremely evolved surface of the agglomerates formed by the protruding ends of the fibres (see figure 1). However, the absence of a pelletizing step will have a positive effect on the cost of production, and, accordingly, on the final price of the product.

Depending on the purpose of the resulting granules and endowing them the necessary properties, the technology allows the introduction of additives in the form of sorbents for the absorption of gases and liquids (for example, zeolite or activated carbon), fire retardants to impart refractory properties, as well as the application of coating substances to the formed granules. In such cases, there are used methods for the production of granules with some added steps.

One of the methods for the production of granules with the addition of a sorbent comprises the following steps:
- shredding of hydrophilic fibrous material and converting the shredded material into dry loose fibre;
- dry mixing of fibrous material with powder material, where the powder material is zeolite or activated carbon;
- intensive mixing of the resulting mixture of fibre and powder material with water in a blender for 10 to 60 seconds;
- pelletizing of agglomerates in the pelletizing disk to obtain granules with a spherical shape;
- drying of the resulting spherical granules.

To obtain granules by this method, the following ratio of starting materials as a percentage of the total volume is used: hydrophilic fibrous material: hydrophilic fibrous material - 17 to 21%, powder material - 1 to 36%, water - 45 to 80%.

There is also a method for the production of granules with the addition of a powder material and a coating material, which comprises the following steps:
- shredding of hydrophilic fibrous material and converting the shredded material into dry loose fibre;
- dry mixing of fibrous material with powder material, where the powder material is zeolite or activated carbon;
- intensive mixing of the resulting mixture of fibre and powder material with water in a blender for 10 to 60 seconds;
- pelletizing of agglomerates in the pelletizing disk to give granules a spherical shape;
- application of a coating material and supply of water on the surface of the granules (see figure 4) where the coating material is bentonite;
- drying of the resulting spherical granules.

The application of a layer of bentonite endows granules with the property of clumping.

To obtain granules by the specified method, the following ratio of starting materials as a percentage of the total volume is used: hydrophilic fibrous material: hydrophilic fibrous material - 15 to 20%, powder material - 1 to 30%, water - 38 to 75%, coating material - 4 to 20%.

The resulting granules acquired the following properties: light and bulky, bulk density 0.2 to 0.6 depending on the presence and amount of additives, with high absorbency - up to 400% by weight of the granules, spherical, with a smooth surface, resistant to destruction in an aquatic environment, no biological contaminants, because the high drying temperature from 100 to 240 °C kills bacteria and other microorganisms.

An example of the use of paper and blended (paper and fabric) granules (see figure 3) as a filler for cat litter, with textile waste possibly constituting up to 80% in a mixture with paper waste, i.e. the process requires the presence of at least 20% paper fibre.

To increase the sorption capacity of granules for ammonia and hydrogen sulphide, natural zeolite of the clinoptilolite type is introduced into the granules in the form of mineral flour (up to 200 microns). For a more uniform distribution of zeolite particles, the mixing process is carried out in a dry state. In the case of dry stirring, the particles occupy the surface of the fibres faster and more uniformly due to the micron size of the zeolite particles and the negative charge on their surface.

The ratio of the weight of fibre and zeolite depends on the required parameters of the finished product. In this case, the ratio by weight of 1:2 (fibre:zeolite) and higher is not advisable in view of the subsequent losses of zeolite during the processing and transportation of dried granules.

The application to the surface of the granules of clay, starchy or other materials that form a thick and sticky medium upon contact with water, makes it possible to endow the granules with the additional property of sticking together into larger chunks when cat urine gets on them (see figure 5). Bentonite and/or kaolin clays are used as coating materials.

Technological operations in the production of filler:
- shredding of waste to obtain dry loose fibre;
- dry mixing of fibre with zeolite. In this operation, it is also possible to use blenders without executive bodies of the barrel type. The duration of mixing is 1 minute;
- intensive mixing of fibre with water to obtain agglomerates at room temperature. The duration of mixing is 1 minute;
- pelletizing of agglomerates in the pelletizing disc to give granules a spherical shape (see figure 2). The duration of pelletizing is 1 minute;
- application of a layer of bentonite to impart clumping properties. The application of bentonite takes place in the pelletizing disk. Simultaneously with bentonite in the form of flour, water is supplied to the surface of the granules, which binds the bentonite particles to one another and to the surface of the granules. The amount of bentonite depends on the size of the resulting granules (surface area) and the requirements for the final product (bulk density, adhesion rate, strength of adhered lumps). The application of a bonding layer can be both on wet granules immediately after the pelletizing of the agglomerates and on already dried ones. The duration of pelletizing is 1 minute;
- drying of the resulting spherical granules in a thermal dryer with a temperature of inflowing gases of 200 °C. Due to the presence of zeolite, the total moisture content of the finished granules is 2 to 3%.

## Claims

1. A method for the production of granules from the waste of hydrophilic fibrous materials comprising the step of shredding hydrophilic fibrous materials, **characterized in that** the method comprises the steps of:
- conversion of the shredded waste of hydrophilic fibrous materials to obtain dry loose fibre;
- intensive mixing of dry loose fibre with water to obtain agglomerates;
- pelletizing of agglomerates to obtain granules with a spherical shape;
- drying of the resulting spherical granules.

2. The method of claim 1, **characterized in that** the hydrophilic fibrous material is paper fibres.

3. The method of claim 1, **characterized in that** hydrophilic fibrous material is blended fibres from paper and textile fibres.

4. The method of claim 1, **characterized in that** intensive mixing of fibre with water takes place in a blender for 10 to 60 seconds.

5. The method of claim 1, **characterized in that** pelletizing takes place in a pelletizing disk for 30 to 70 seconds.

6. The method of claim 1, **characterized in that** drying takes place at a temperature of 100 to 240 °C.

7. The method of claims 1 to 6, **characterized in that,** in order to obtain granules by this method, the following ratio of starting materials as a percentage of the total volume is used: hydrophilic fibrous material - 20 to 30%, water - 70 to 80%.

8. The method of claim 1, **characterized in that** the method comprises the steps of:
- shredding of hydrophilic fibrous material and converting the shredded material into dry loose fibre;
- dry mixing of fibrous material with powder material;
- intensive mixing of the resulting mixture of fibre and powder material with water in a blender for 10 to 60 seconds;
- pelletizing of agglomerates in the pelletizing disk to obtain granules with a spherical shape;
- drying of the resulting spherical granules.

9. The method of claim 8, **characterized in that,** in order to obtain granules by this method, the following ratio of starting materials as a percentage of the total volume is used: hydrophilic fibrous material -17 to 21%, powder material -1 to 36%, water - 45 to 80%.

10. The method of claims 1 and 8, **characterized in that** the method comprises the steps of:
- shredding of hydrophilic fibrous material and converting the shredded material into dry loose fibre;
- dry mixing of fibrous material with powder material;
- intensive mixing of the resulting mixture of fibre and powder material with water in a blender for 10 to 60 seconds;
- pelletizing of agglomerates in the pelletizing disk to give granules a spherical shape;
- application of a coating material and supply of water on the surface of the granules;
- drying of the resulting spherical granules.

11. The method of claim 10, **characterized in that** the coating material is bentonite.

12. The method of claims 10 to 11, **characterized in that,** in order to obtain granules by the specified method, the following ratio of starting materials as a percentage of the total volume is used: hydrophilic fibrous material - 15 to 20%, powder material - 1 to 30%, water - 38 to 75%, coating material - 4 to 20%.

13. The method of claims 8 to 12, **characterized in that** the powder material is zeolite.

14. The method of claims 8 to 12, **characterized in that** the powder material is activated carbon.
